# FASCICULE DE BREVET EUROPEEN

(11) **EP 2 548 006 B1**
(45) Date de publication et mention de la délivrance du brevet: **21.08.2019**
(21) Numéro de dépôt: 11706281.0
(22) Date de dépôt: 04.03.2011
(51) Int. Cl.: G01N 21/954, B60C 25/14, B60C 25/125, B60C 25/138, G01M 17/02, H04N 7/18

(54) **DISPOSITIF DE MAINTIEN DESTINE A L'INSPECTION VISUELLE D'UN PNEUMATIQUE**
WARTUNGSVORRICHTUNG ZUR VISUELLEN INSPEKTION VON LUFTREIFEN
MAINTENANCE DEVICE FOR THE VISUAL INSPECTION OF A TYRE

(30) Priorité: 15.03.2010 FR 1051828
(43) Date de publication de la demande: 23.01.2013
(73) Titulaire: Compagnie Générale des Etablissements Michelin, 63000 Clermont-Ferrand (FR)
(72) Inventeur: LEOBAL, Christian, F-63960 Veyre-monton (FR); BOR, Gérard, F-63800 La Roche Noire (FR)
(74) Mandataire: Cohen, Sylvia
(86) Numéro de dépôt international: PCT/EP2011/053278
(87) Numéro de publication internationale: WO 2011/113711

(56) Documents cités:
- US-A- 4 160 537
- US-A1- 2008 066 532
- US-B2- 7 360 410

## Description

L'invention concerne le domaine de la fabrication des pneumatiques, et plus particulièrement le domaine du contrôle visuel de ces derniers en cours ou en fin de processus de production.

L'inspection visuelle des pneumatiques est largement développée dans l'industrie du pneumatique et fait encore le plus souvent appel à la dextérité des opérateurs chargés de détecter les éventuelles imperfections visibles à la surface du pneumatique. A cet effet, de nombreux moyens d'assistance ont été développés pour faciliter la manutention et rendre visibles des zones particulièrement inaccessibles telles que la partie intérieure du pneumatique.

Ces moyens ont pour fonction de maintenir les bourrelets du pneumatique en position ouverte ou écartée, et de mettre le pneumatique en rotation comme cela est décrit à titre d'exemple dans la publication US 4 160 537.

Avec l'avancée de la puissance de traitement des moyens informatiques, les manufacturiers entrevoient dés à présent la possibilité de rendre ces taches de contrôle automatique. A cet effet des moyens d'éclairage et d'imagerie numérique sont introduits dans la partie intérieure du pneumatique afin de définir l'image et le relief intérieur. Cette image numérique est alors traitée par des moyens informatiques adaptés, et comparée avec une image de référence de manière à déterminer les éventuels anomalies de surface du pneumatique.

L'invention s'intéresse plus particulièrement au moyen de maintien et de mise en rotation du pneumatique pendant la phase d'acquisition de l'image de la partie intérieure du pneumatique.

Ce moyen doit être apte à maintenir le pneumatique en position ouverte tout en garantissant une bonne précision géométrique. De plus il doit autoriser le passage des moyens d'éclairage et d'acquisition d'image en assurant un mouvement relatif de ces dits moyens d'acquisition par rapport au pneumatique.

Des moyens dédiés à cette fonction sont divulgués, à titre d'exemple, dans la publication US2008/0066532. L'appareil décrit comprend une pluralité de paires de crochets, ou de pattes, alignés verticalement, et destinés à écarter les bourrelets et à maintenir le pneumatique en position ouverte. Ces pattes tournent autour d'un axe entre une position d'engagement et une position repliée pour permettre l'introduction et l'extraction du pneumatique du dispositif.

Ce type d'appareil pose toutefois deux types de problème. En effet, bien que le nombre de paires de pattes ne soit pas limité, on observe que le bourrelet se déforme entre deux pattes de maintien successives, ce qui a pour effet d'onduler la forme des bourrelets inférieurs et supérieurs par rapport au plan du bourrelet perpendiculaire à l'axe du pneumatique, et de modifier substantiellement la géométrie du pneumatique réel par rapport à une image théorique. Un deuxième inconvénient provient du fait que les pattes de maintien sont fixes par rapport au bourrelet, et interdisent la réalisation de l'image des parties du bourrelet sur lesquelles elles s'appuient.

L'invention a pour objet de supprimer ces deux inconvénients tout en proposant un moyen de maintien apte à conserver la géométrie des bourrelets de manière précise et répétitive, et apte à accueillir les moyens d'imagerie.

Le dispositif selon l'invention repose sur le fait que les moyens de visualisation sont conçus en règle générale pour inspecter une zone angulaire limitée voire limitée à une ligne matérialisée par la largeur d'une fente ou d'un rayon laser. L'image complète est alors obtenue en ajoutant l'ensemble des images des portions circonférentielles en faisant tourner le pneumatique sur son axe par rapport au moyen d'acquisition d'image. Il convient donc de maîtriser la position géométrique de la seule zone éclairée sur laquelle on réalise la prise de vue.

Le dispositif selon l'invention comprend :
- des moyens d'acquisition de l'image de la surface intérieure du pneumatique, formés des moyens d'éclairage et d'une ou plusieurs caméras, et aptes à pénétrer dans l'espace intérieur du pneumatique et à réaliser l'image d'une zone angulaire d'angle donné (a) de la surface intérieure du pneumatique,
- des moyens de centrage aptes verrouiller un premier bourrelet par l'ensemble de sa circonférence sur un plateau de référence, et à mettre le pneumatique en rotation relative autour de son axe XX' par rapport auxdits moyens d'acquisition d'image,

Ce dispositif se caractérise en ce qu'il comprend également des moyens d'ouverture et de maintien du second bourrelet comportant deux rouleaux de maintien intérieur, disposés circonférentiellement contigus l'un par rapport à l'autre, d'axe sensiblement radial, aptes à venir en contact avec le coté intérieur dudit second bourrelet, et au moins un rouleau de maintien extérieur, d'axe sensiblement radial disposé sensiblement au milieu du secteur angulaire formé par les deux rouleaux de maintien intérieur et apte à venir en appui sur la partie externe dudit second bourrelet, les rouleaux de maintien intérieur et extérieur étant montés solidaires en rotation autour de l'axe XX' desdits moyens d'acquisition de l'image.

Les moyens de centrage comprennent des moyens de verrouillage qui, en maintenant le premier bourrelet par l'ensemble de sa circonférence sur ledit plateau de référence, permettent de placer géométriquement le pneumatique par rapport à une référence mécanique, et de maintenir l'axe de rotation du pneumatique dans une position fixe confondue avec l'axe de rotation du plateau de référence pendant la durée de l'inspection. Les moyens de centrage permettent aussi de mettre le pneumatique en rotation relative par rapport aux rouleaux de maintien intérieurs et extérieur et par rapport aux moyens d'acquisition de l'image intérieure. Lors de ce mouvement, le second bourrelet roule sur les rouleaux de maintien intérieur et extérieur et, en raison de la disposition particulière desdits rouleaux, le second bourrelet passe en position ouverte entre trois points fixes par rapport au plateau de référence qui lui imposent un chemin géométrique déterminé et constant.

En plaçant judicieusement les moyens d'acquisition d'image de manière à acquérir une image d'une portion angulaire interne centrée sensiblement sur le milieu du secteur angulaire formé par les deux rouleaux de maintien intérieur, l'image acquise est totalement dégagée de la présence de moyen de maintien ou de relevage. De la sorte, en faisant subir au pneumatique un tour complet autour de son axe par rapport aux moyens d'acquisition d'image, on peut acquérir une image complète de la surface intérieure du pneumatique sans subir les inconvénients cités ci-dessus concernant les moyens décrits dans l'art antérieur. De manière préférentielle, et pour plus de commodité, les moyens d'acquisition de l'image et les rouleaux de maintien intérieur et extérieur sont fixes en rotation autour de l'axe XX'.

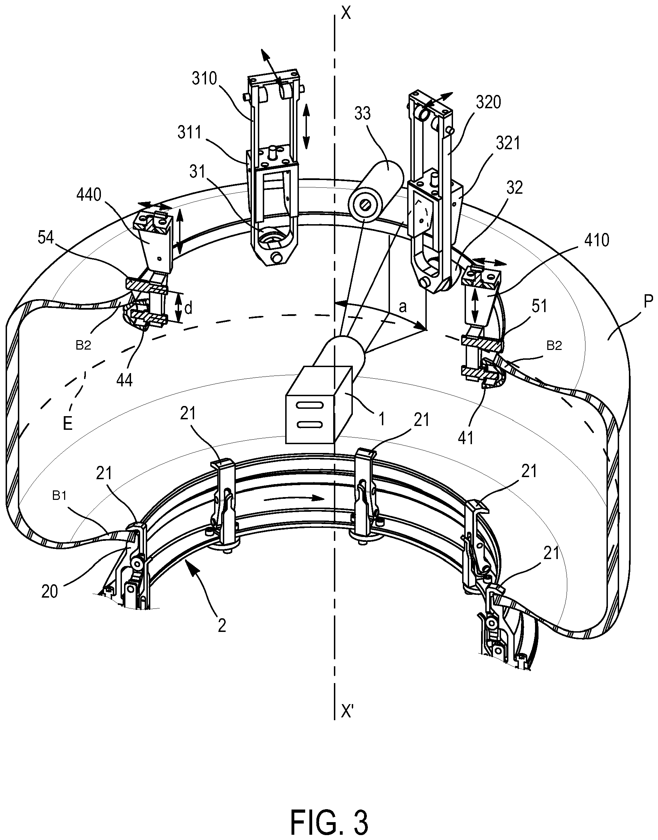

La description qui suit se rapporte à un exemple préféré de mise en oeuvre de l'invention et s'appuie sur les figures 1 à 9 dans lesquelles
- La figure 1 représente une vue générale en perspective du dispositif vue de devant,
- la figure 2 représente une vue écorchée en perspective du dispositif vue de derrière,
- la figure 3 représente une vue écorchée simplifiée en perspective du dispositif vue de derrière,
- les figures 4, 5 et 6 représentent respectivement une vue de dessous et des vues en coupe du dispositif,
- les figures 7, 8 et 9 représentent des vues en coupe du dispositif de verrouillage du premier bourrelet sur le moyen de centrage.

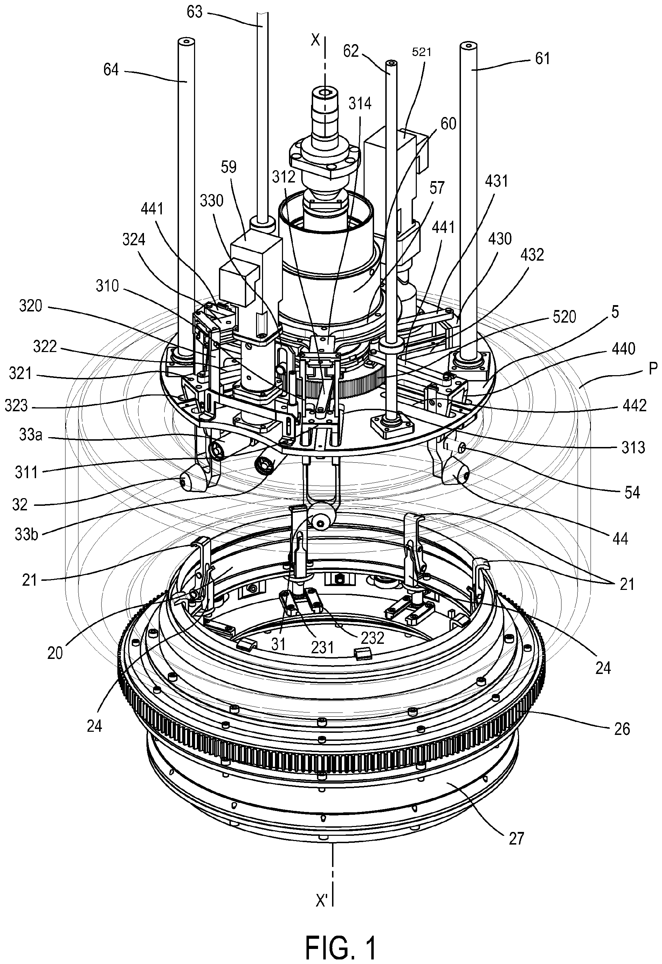

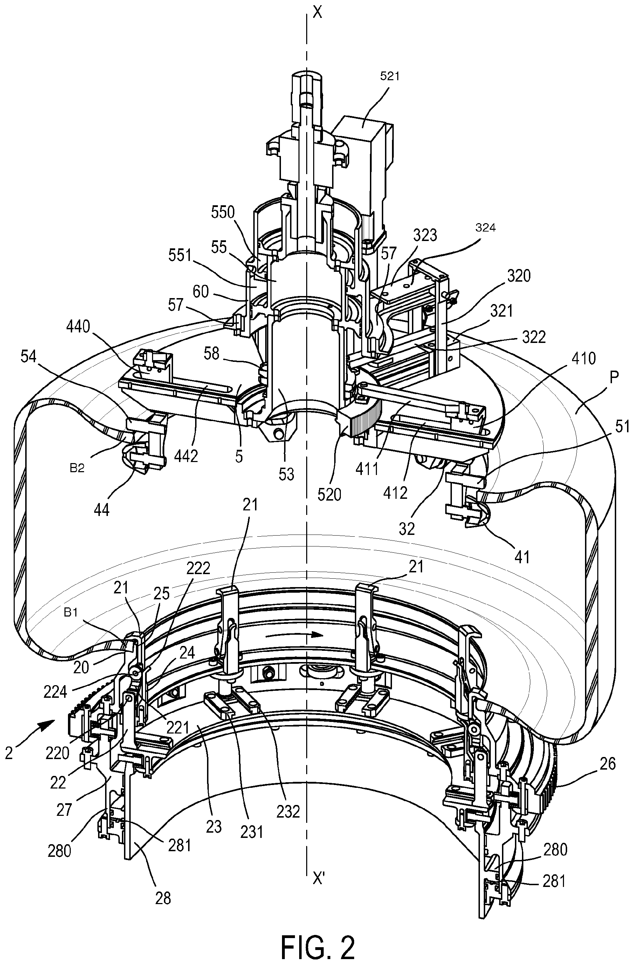

Le dispositif représenté sur les figures 1 et 2 permet de visualiser les principaux organes formant le dispositif selon un mode préféré de réalisation de l'invention.

Sur cette représentation, le pneumatique P, d'axe XX', est monté sur un moyen de centrage 2. Ce moyen de centrage comprend une jante 20 dont la forme est adaptée au niveau du seat 25 pour recevoir le premier bourrelet B1 du pneumatique P.

Des crochets 21, répartis sur la circonférence de la jante 20, pivotants autour d'un axe 222, maintiennent le premier bourrelet B1 en position par l'ensemble de sa circonférence sur le seat 25. La jante 20, qui fait office de plateau de référence, est elle-même montée sur une virole support 27, d'axe XX', reliée à un châssis (non représenté) par des roulements, de sorte que ladite virole 27 peut être entraînée en rotation autour de l'axe XX' par l'intermédiaire d'un pignon motorisé (non représenté) en prise avec une crémaillère circulaire 26 montée sur la périphérie radialement externe de la virole 27. L'axe de la jante est géométriquement fixe par rapport au bâti.

Un vérin annulaire 28, est monté à l'intérieur de la virole support 27 et se déplace axialement le long de l'axe XX' lorsque l'on fait varier la pression pneumatiques relatives à l'intérieur des chambres annulaires 280 et 281, étanches à l'air.

Le vérin annulaire 28, supporte un plateau circulaire 23 sur lequel sont montés des tiges axiales 22 par l'intermédiaire de glissières 231 et 232, permettant un réglage de la position radiale des tiges axiales 22.

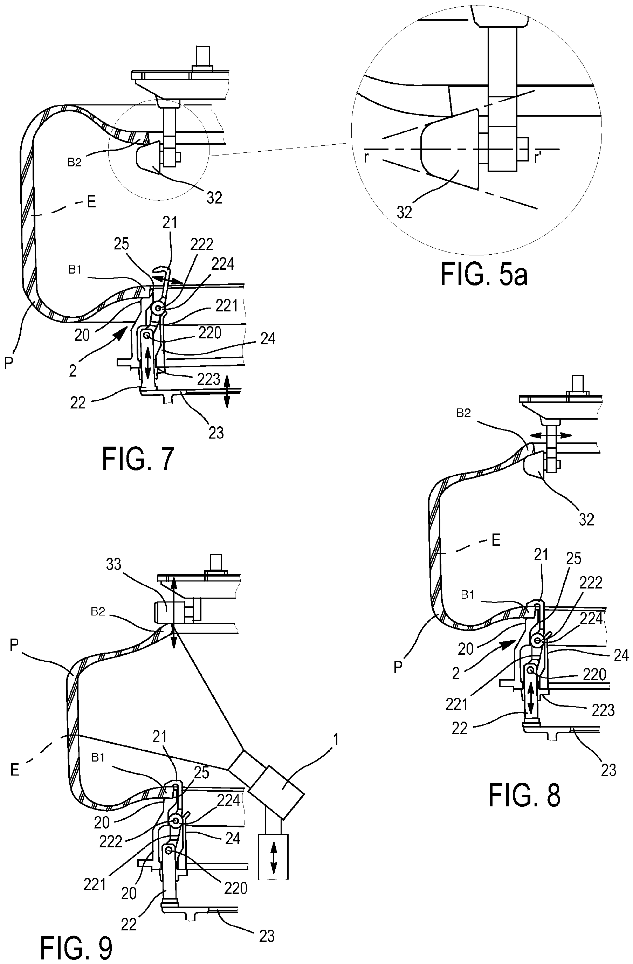

Les tiges axiales 22 sont reliées à un bras 221 par l'intermédiaire d'un axe 220, comme cela est illustré aux figures 7, 8 et 9 permettant de mieux visualiser le mouvement des crochets 21. Le bras 221 est relié au crochet 21 par l'intermédiaire d'un axe 222. Les axes 220 et 222 autorisent le mouvement du bras 221 et du crochet 21 dans un plan radial. L'axe 222 comporte une roulette 224 dont le déplacement est guidé dans un chemin délimité par la partie radialement interne de la jante 20 et par la surface radialement externe d'un bras de guidage 24. Le bras de guidage 24 est relié à la jante 20 par un anneau circulaire 223 comportant des lumières au travers desquelles les tiges axiales 22 coulissent librement dans la direction axiale.

La forme de la surface radialement interne de la jante 20 et de la surface radialement externe du bras de guidage 24 sont adaptées de manière à coopérer pour imposer le chemin du mouvement de la roulette 224 et du crochet 21 dans un plan radial, sous l'action du mouvement de monte et baisse du vérin annulaire 28 et des tiges axiales 22, et transmis au crochet par le bras 221.

En position haute du plateau 23, correspondant à la mise en pression de la chambre annulaire 281, comme cela est représenté à la figure 7, le crochet 21 est basculé radialement vers l'intérieur autour de l'axe 222 de manière à libérer le premier bourrelet B1 et permettre l'extraction du pneumatique de la jante 20. En position basse, correspondant à la mise en pression de la chambre annulaire 280, comme cela est illustré à la figure 8, le crochet 21 est en prise avec l'ensemble des la circonférence du premier bourrelet B1 de manière à le maintenir fermement appliqué sur le seat 25 de la jante 20.

Lorsque le pneumatique P est maintenu sur la jante 20 l'axe du pneumatique correspond à l'axe XX' de rotation du moyen de centrage tel que décrit ci-dessus. La mise en rotation du pneumatique autour de l'axe XX' s'effectue en actionnant le pignon motorisé agissant sur la crémaillère 26. Le pneumatique étant fermement maintenu sur la jante 20, son axe de rotation reste confondu avec l'axe de rotation de la jante quelques soient les mouvements axiaux opérés sur le second bourrelet B2 lors de l'opération d'ouverture dudit second bourrelet B2.

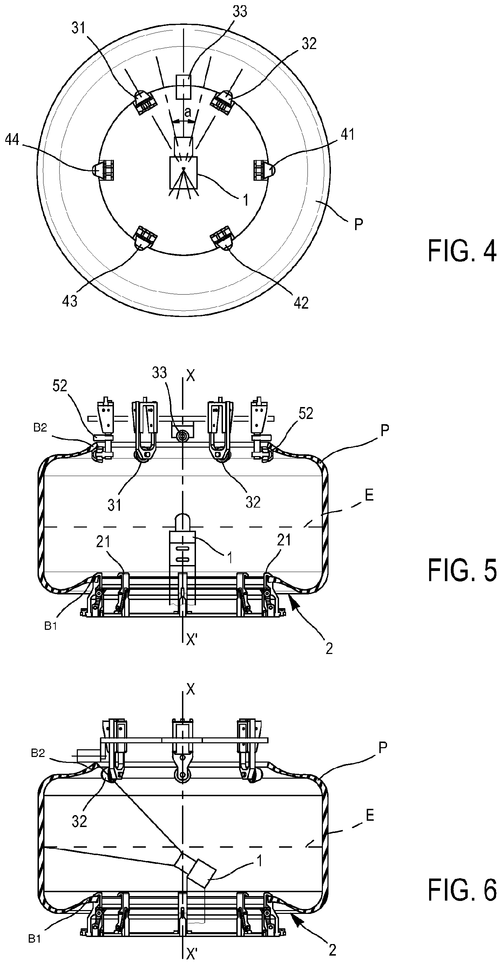

Les figures 4 à 6 permettent de visualiser les positions respectives des rouleaux de maintien intérieur 31 et 32 et du rouleau de maintien extérieur 33. Ces rouleaux, sont libres en rotation autour de leurs axes respectifs orientés dans la direction radiale.

Les rouleaux de maintien intérieur sont mobiles entre une position escamotée dans laquelle ils sont ramenés radialement vers l'axe XX' de manière à autoriser l'extraction du pneumatique, et une position déployée dans laquelle ils viennent en contact avec la partie intérieure du second bourrelet B2 comme cela est illustré dans les figures 4 à 6.

Le rouleau de maintien extérieur 33 qui vient en appui sur la partie externe du second bourrelet B2, est disposé sensiblement au milieu du secteur angulaire formé par les deux rouleaux de maintien intérieur 31 et 32. On entend par secteur angulaire, l'angle obtus formé par les rayons passant par l'axe XX' et reliant les deux rouleaux de maintien intérieur, comme cela est illustré à la figure 4. L'axe du rouleau de maintien extérieur 33 est alors positionné sensiblement dans le plan radial passant par la bissectrice de l'angle formé par les deux rouleaux de maintien intérieur. Ce rouleau est disposé sur le plateau 5 radialement à l'aplomb du second bourrelet B2.

Les moyens d'acquisition d'image 1, pénètrent axialement dans l'espace intérieur du pneumatique par le conduit intérieur du vérin annulaire 28 et de la jante 20. Ces moyens sont formés d'une ou plusieurs caméras et d'un moyen d'éclairage. Les moyens d'acquisition d'image sont aptes à acquérir, selon les besoins, l'image en deux ou en trois dimensions de la surface intérieure du pneumatique. En conséquence, la ou les caméras sont disposées pour acquérir une image d'une zone angulaire d'angle a de ladite surface intérieure, de sorte que le champ de la prise de vue soit centré sensiblement sur le secteur angulaire formé par les deux rouleaux de maintien intérieur 31 et 32. On règle alors la disposition des rouleaux de maintien intérieur pour qu'ils soient placés à l'extérieur du champ de prise de vue de la caméra.

En pratique, et en référence aux figures 5 et 6, les moyens d'acquisition sont formés par un moyen d'éclairage de type laser ou lumière de fente formant une raie de lumière disposée dans un plan radial dont l'intersection avec la surface intérieure forme une ligne radiale. On s'arrange alors pour que cette ligne radiale soit placée au milieu du secteur angulaire formé par les deux rouleaux de maintien extérieur. L'image de la surface est obtenue en juxtaposant les images de la ligne éclairée en faisant opérer un tour complet au pneumatique par rapport aux moyens d'acquisition d'image 1.

Selon une forme préférentielle de réalisation de l'invention, les moyens d'acquisition d'image 1 et les rouleaux de maintien intérieur et extérieur 31, 32, 33 sont fixes en rotation par rapport à l'axe XX', et le pneumatique est entraîné en rotation autour de l'axe XX' par les moyens de centrage 2. Il peut être envisagé, de manière alternative, de mettre en rotation les moyens d'acquisition d'image et les rouleaux de maintien intérieur et extérieur autour de l'axe XX' et de maintenir le pneumatique en position fixe. On observera que cette solution complique les mécanismes d'entraînement et de support qui seront décrits par la suite.

Selon une autre forme de réalisation de l'invention, les moyens d'éclairage sont dirigés sur la seule partie comprise entre l'équateur E et le second bourrelet B2. En effet, les crochets 21 occultent une partie de la surface intérieure. Il est alors nécessaire de faire deux prises de vue pour avoir l'image complète de la surface intérieure comme cela sera explicité plus en détail par la suite.

Une alternative de réalisation de l'invention prévoit de disposer deux rouleaux de maintien extérieur 33a et 33b comme cela est illustré à la figure 1. Dans ce cas particulier, les rouleaux de maintien extérieur sont placés de manière symétrique par rapport au plan radial passant par la bissectrice de l'angle formé par les rouleaux de maintien intérieurs 31 et 32. Cette variante de réalisation permet, en orientant judicieusement la caméra, de réaliser l'image de la partie supérieure du second bourrelet B2. A cet effet il conviendra de disposer la lumière de fente au milieu du secteur angulaire formé par les deux rouleaux de maintien extérieur 33a et 33b.

Sur le secteur circonférentiel complémentaire au secteur occupé par les rouleaux de maintien intérieurs et par le (ou les) rouleau(x) de maintien extérieur 33, sont disposés un ou plusieurs rouleaux de relevage, 41, 42, 43, 44. Ces rouleaux sont libres en rotation autour d'un axe sensiblement radial et sont aptes à venir en contact avec le coté intérieur du second bourrelet B2 et, par un mouvement axial, à relever le reste dudit second bourrelet B2 dans le but de minimiser les mouvements axiaux du second bourrelet B2 pendant l'opération de prise de prise de vue et de formation de l'image intérieure.

On observera sur le médaillon de la figure 7 la forme particulière d'un rouleau de maintien intérieur. Ce rouleau a la forme générale d'un tronc de cône dont la pointe est orientée radialement vers l'extérieur. Cette disposition particulière permet de soutenir le second bourrelet B2 sans le détériorer pendant la phase de relevage au cours de laquelle le second bourrelet B2 tourne autour de la tringle rigide de renfort talon. Cette géométrie particulière intéresse pour les mêmes raisons les rouleaux de relevage 41, 42, 43 et 44.

Des ergots 51, 52 (non visible), 53 (non visible), 54 sont disposés axialement vers l'extérieur par rapport aux rouleaux de relevage dont ils sont décalés d'une distance (d) dont la valeur est déterminée expérimentalement. En pratique, la valeur de cette distance correspond à environ quatre ou cinq fois l'épaisseur du second bourrelet B2. Ces ergots sont destinés à replacer le second bourrelet B2 en position fermée à la fin du cycle de prise de vue.

Les figures 1 et 2 permettent de visualiser les moyens de support et d'animation des rouleaux de maintien et des rouleaux de relevage.

Un plateau 5, mobile axialement sous l'action d'une vis sans fin axiale actionnée par un moteur (non représentée), est relié à un châssis fixe par l'intermédiaire de tiges de guidage 61, 62, 63, 64. Le plateau 5 embarque l'ensemble des moyens supportant les rouleaux de maintien 31, 32 et 33 et de relevage.41, 42, 43, 44.

Les rouleaux de maintien intérieurs 31 et 32 sont montés sur des cadres mobiles 310, 320, eux-mêmes montés coulissants dans la direction axiale, sur des supports, respectivement 311 et 321.

Les supports 311 et 321 coulissent librement dans des lumières 313, 323, et sont mobiles radialement sous l'action de biellettes, respectivement 312 et 322, entraînée par une couronne annulaire dentée 520 en rotation sous l'action d'un moteur 521.

La partie centrale du plateau 5 supporte une entretoise 53, autour de laquelle circule la couronne annulaire dentée 520, et sur laquelle est monté un vérin annulaire à double action comprenant une partie fixe 55 montée sur l'entretoise 53, et une partie 60, mobile axialement, dans un sens ou dans un autre, sous l'effet de la mise sous pression des chambres étanches à l'air 550 ou 551. La montée ou la descente de la partie mobile 60 du vérin annulaire entraîne la montée ou la descente des cadres 310 et 320 le long des supports 311 et 321 par l'intermédiaire d'un plateau annulaire 57 et d'un bras radial 314 et 324. De la sorte, il est possible de piloter la montée et la descente des rouleaux de maintien intérieur 31 et 32 par rapport au plateau 5.

Le ou les rouleaux de maintien extérieur (33 ou 33a et 33b), sont supportés par un cadre 330, et sont mobiles axialement par rapport au plateau 5 sous l'action du moteur 59. De la sorte, il est possible de déplacer dans la seule direction axiale le ou les rouleaux de maintien extérieur par rapport au plateau 5. Un réglage radial peut toutefois être aménagé pour adapter dimensionnellement la position des rouleaux de maintien extérieur.

Les rouleaux de relevage 41, 42, 43 et 44 sont supportés par une potence 410, 420 (non visible), 430, 440. De la même manière que les supports 310 et 320, les potences 410, 420 (non visible), 430 et 440 sont montés sur le plateau 5 et coulissent librement dans des lumières 412, 422 (non visible), 432 et 442. Ces potences sont mobiles radialement sous l'action des biellettes, respectivement 411, 421 (non visible), 431 et 441, entraînées par la couronne annulaire 520 en rotation sous l'action du moteur 521. De la sorte le mouvement radial des rouleaux de maintien intérieur 31 et 32, et des rouleaux de relevage 41, 42, 43, 44 est commandé simultanément par l'action du moteur 521.

L'animation du dispositif selon l'invention prévoit les séquences suivantes.

Dans un premier temps, on dispose le pneumatique sur le moyen de centrage 2, de sorte que le premier bourrelet B1 soit installé sur le seat 25 de la jante 20. Les crochets 21 sont alors refermés sous l'action du vérin annulaire 28.

On abaisse ensuite le plateau 5 en direction du second bourrelet B2. Lors de cette manoeuvre, les rouleaux de maintien intérieurs 31 et 32 et les rouleaux de relevage 41, 42, 43, 44 sont dans une position radiale repliée de manière à autoriser le passage desdits rouleaux dans l'espace intérieur du pneumatique à la hauteur du second bourrelet B2. On abaisse le plateau 5 de sorte que les rouleaux de relevage 41, 42, 43 et 44 soient situés dans un plan méridien positionné à l'intérieur du volume du pneumatique, et que les ergots 51, 52 (non visible), 53 (non visible) et 54 soient situés dans un plan méridien extérieur au volume intérieur du pneumatique.

A la séquence suivante, on active le moteur 521 et on déploie radialement les rouleaux de maintien intérieur 31 et 32 et les rouleaux de relevage 41, 42, 43 et 44, de sorte que lesdits rouleaux soient disposés radialement sous le second bourrelet B2 à relever B2.

On abaisse alors axialement les rouleaux de maintien intérieur 31 et 32 par rapport au plateau en abaissant la partie mobile 60 du vérin annulaire, de sorte que les dits rouleaux de maintien 31 et 32 soient disposés dans un plan méridien axialement interne par rapport au plan méridien sur lequel sont placés les rouleaux de relevage 41, 42, 43 et 44.

En relevant axialement le plateau 5, les rouleaux de relevage 41, 42, 43 et 44 viennent en contact avec la partie interne du second bourrelet B2 et le relèvent par rapport à l'équateur E du pneumatique sur une partie de sa circonférence. Le mouvement de relevage partiel est arrêté lorsque le second bourrelet atteint une côte axiale d'ouverture prédéterminée en fonction de la dimension du pneumatique.

On relève axialement la partie mobile 60 du vérin annulaire de manière à relever dans la direction axiale, sous l'action des rouleaux de maintien intérieur 31 et 32, la partie complémentaire du second bourrelet B2 par rapport à l'équateur E du pneumatique. Les rouleaux de maintien sont alors positionnés sensiblement dans le même plan méridien que les rouleaux de relevage 41, 42, 43 et 44.

Bien qu'il serait tout à fait possible de relever le second bourrelet B2 en mettant simultanément au contact de la partie intérieure du second bourrelet B2 les rouleaux de maintien 31 et 32 et les rouleaux de relevage 41, 42, 43 et 44, il a été mis en évidence que cette action en deux temps est rendue quasiment nécessaire si on cherche à réduire les efforts liés à l'ouverture axiale du second bourrelet B2.

Pour assurer une bonne stabilité dimensionnelle du pneumatique, il est possible de relever légèrement le plateau 5 dans la direction axiale de manière à mettre le pneumatique en tension.

On abaisse alors le (33) ou les (33a, 33b) rouleaux de maintien extérieur en actionnant le moteur 59 de manière à porter lesdits rouleaux extérieur au contact de la partie externe du second bourrelet B2. Le second bourrelet B2 est alors positionné simultanément au contact des rouleaux de maintien intérieur 31 et 32 et du (ou des) rouleaux de maintien extérieur 33 ou 33a et 33b.

On fait pénétrer axialement les moyens d'acquisition de l'image intérieure 1 de sorte à éclairer la portion de l'espace intérieur située entre l'équateur E et le second bourrelet B2.

L'étape suivante consiste à mettre le pneumatique en rotation autour de l'axe XX' en activant le moteur (non représenté) commandant les pignons en prise avec la crémaillère 26.

Le second bourrelet B2 roule sur les rouleaux de maintien intérieur 31 et 32 et sur le rouleau de maintien extérieur 33 de sorte que la position de la surface intérieure éclairée par les moyens d'acquisition de l'image intérieure est rigoureusement constante par rapport auxdits moyens d'acquisition, lorsque le pneumatique effectue une rotation de 360° autour de l'axe XX'.

Une fois l'image de la surface intérieure comprise entre l'équateur E et le second bourrelet B2 est acquise, on retire axialement les moyens d'acquisition de l'image intérieure 1.

On relève le rouleau de maintien extérieur 33 à l'aide du moteur 59, puis on abaisse axialement le plateau 5 de manière à mettre les ergots 51, 52 (non visible), 53 (non visible) et 54 en contact avec la partie axialement externe du second bourrelet B2 et on poursuit le mouvement axial du plateau jusqu'à une cote prédéterminée à laquelle le second bourrelet B2 est complètement refermé.

On escamote radialement les rouleaux de maintien intérieur 31 et 32 et les rouleaux de relevage 41, 42, 43 et 44 en activant le moteur 521, et on relève le plateau 5 pour dégager l'espace au dessus du second bourrelet B2.

On déverrouille les crochets 21 de manière à libérer le pneumatique et on extrait le pneumatique dudit dispositif.

On fera observer que le dispositif faisant l'objet de la présente description permet l'acquisition de l'image d'une moitié intérieure. Il est alors nécessaire de retourner le pneumatique et de recommencer la séquence d'opérations telle que décrite ci-dessus pour acquérir l'image de la deuxième moitié de la surface intérieure. On obtient l'image complète de la surface intérieure en juxtaposant la première et la seconde image. En raison de la grande précision géométrique du positionnement du pneumatique pendant la phase d'acquisition de l'image intérieure, les opérations de recalage d'image sont réduites à une simple opération de mise en correspondance de l'azimut de départ des deux moitiés d'image.

On fera observer en conclusion, que la forme de réalisation de l'invention faisant l'objet de la présente description peut faire l'objet de nombreuses variantes, tant dans la construction du dispositif que dans le séquencement des phases de sa mise en oeuvre sans qu'il soit nécessaire de se départir des principes généraux faisant l'objet de la présente description.

## Revendications

1. Dispositif d'inspection de la surface intérieure située entre un premier et un second bourrelet (B1, B2) d'un pneumatique (P) comprenant :
- des moyens d'acquisition de l'image de la surface intérieure (1) du pneumatique, formés des moyens d'éclairage et d'une ou plusieurs caméras, et aptes à pénétrer dans l'espace intérieur du pneumatique et à réaliser l'image d'une zone angulaire d'angle donné (a)D de la surface intérieure du pneumatique,
- des moyens de centrage (2) aptes à verrouiller le premier bourrelet (B1) par l'ensemble de sa circonférence sur un plateau de référence, et aptes à mettre le pneumatique en rotation relative autour de son axe XX' par rapport auxdits moyens d'acquisition d'image,
ledit dispositif comprenant également des moyens d'ouverture et de maintien du second bourrelet (B2) comportant deux rouleaux de maintien intérieur (32, 32), disposés circonférentiellement contigus l'un par rapport à l'autre, d'axe sensiblement radial, espacés angulairement d'un angle au moins égal à l'angle de la zone angulaire (a), se déplaçant entre une position escamotée et une position déployée dans laquelle lesdits rouleaux de maintien intérieur sont aptes à venir en contact avec le côté intérieur du second bourrelet (B2) et à opérer un mouvement dans la direction axiale de manière à écarter par rapport à l'équateur du pneumatique puis à maintenir ouvert ledit second bourrelet (B2), et au moins un rouleau de maintien extérieur (33, 33a, 33b), d'axe sensiblement radial disposés sensiblement au milieu du secteur angulaire formé par les deux rouleaux de maintien intérieur (31, 32) et aptes à venir en appui sur la partie externe dudit second bourrelet (B2), les rouleaux de maintien intérieur (31, 32) et extérieur (33, 33a, 33b) étant montés solidaires en rotation autour de l'axe XX' desdits moyens d'acquisition de l'image (1).

2. Dispositif selon la revendication 1, comprenant deux rouleaux de maintien extérieur (33, 33a, 33b) espacés angulairement d'un angle au moins égal à l'angle de la zone angulaire (a).

3. Dispositif selon l'une des revendications 1 à 2, dans lequel les moyens d'acquisition d'image (1) sont positionnés de manière à acquérir une image d'une portion angulaire (a) de l'intérieur du pneumatique centrée sur le milieu du secteur angulaire formé par les axes des deux rouleaux de maintien intérieur (31, 32).

4. Dispositif selon l'une des revendications 1 à 3, dans lequel les moyens d'acquisition de l'image (1) et les rouleaux de maintien intérieur (31, 32) et extérieur (33, 33a, 33b) sont fixes en rotation autour de l'axe XX', et dans lequel le pneumatique (P) est entraîné en rotation autour de son axe XX' par lesdits moyens de centrage (2).

5. Dispositif selon l'une des revendications 1 à 4, comprenant, en plus de la paire de rouleaux de maintien intérieur (31, 32), un ou plusieurs rouleaux de relevage (41, 42, 43, 44) d'axe sensiblement radial se déplaçant radialement entre une position escamotée, et une position déployée dans laquelle lesdits rouleaux de relevage sont aptes à venir en contact avec le coté axialement intérieur dudit second bourrelet (B2) et à opérer un mouvement dans la direction axiale de manière à relever ledit second bourrelet (B2) par rapport à l'équateur (E) du pneumatique (P), lesdits rouleaux de relevage (41, 42, 43, 44) étant disposés circonférentiellement sur la partie complémentaire de l'espace angulaire occupé par les rouleaux de maintien intérieur (31, 32).

6. Dispositif selon l'une des revendications 1 à 5, comprenant des ergots (51, 52, 53, 54) disposés axialement à l'extérieur du second bourrelet (B2) à une distance donnée (d) des rouleaux de relevage (41, 42, 43, 44), et aptes à réaliser un mouvement axial de manière à replacer le second bourrelet (B2) en position fermée.

7. Dispositif selon l'une des revendications 1 à 6, dans lequel les rouleaux de maintien intérieur (31, 32) et les rouleaux de relevage (41, 42, 43, 44) ont un profil radial sensiblement tronc conique.

8. Dispositif selon l'une des revendications 1 à 7, dans lequel les moyens de centrage du pneumatique (2) comprennent une virole de centrage (20), formant plateau de référence, et apte à recevoir le premier bourrelet (B1), et des crochets escamotables (21) de verrouillage dudit second bourrelet sur ladite virole de centrage placés à intervalle réguliers sur l'ensemble de la circonférence de ladite virole de centrage (20).

9. Dispositif selon la revendication 8 dans lequel la virole de centrage (20) comporte un passage central autorisant l'accès des moyens d'acquisition de l'image (1) à l'intérieur du pneumatique (P).

10. Dispositif selon l'une des revendications 1 à 9, dans lequel les moyens d'acquisition de l'image (1) comprennent un moyen d'éclairage laser permettant d'éclairer une ligne radiale et une caméra apte à capter la lumière réfléchie par la surface intérieure du pneumatique, et dans lequel ladite ligne radiale est centrée sensiblement sur le milieu du secteur angulaire formé par la paire de rouleaux de maintien intérieur (31, 32).

11. Méthode d'inspection de la partie intérieure d'un pneumatique comprenant un premier et un second bourrelet (B1, B2) à l'aide d'un dispositif de maintien et d'inspection selon l'une des revendications 1 à 8 comprenant les étapes au cours desquelles :
- on installe le pneumatique (P) sur le dispositif
- on active les moyens de centrage (2) de manière à verrouiller le premier bourrelet (B1) sur la virole de centrage,
- on escamote radialement les rouleaux de maintien intérieur (31, 32) et les rouleaux de relevage (41, 42, 43, 44).
- on abaisse le plateau 5 en direction de l'espace intérieur du pneumatique,
- on déploie radialement les rouleaux de maintien intérieur (31, 32) et les rouleaux de relevage (41, 32, 43, 44) dans l'espace intérieur du pneumatique,
- on relève axialement le second bourrelet (B2) en relevant le plateau (5),
- on abaisse le/les rouleaux de maintien extérieur (33, 33a, 33b) de manière à tenir fermement le second bourrelet (B2) en position relevée entre les deux rouleaux de maintien intérieur (31, 32) et le/les rouleaux de maintien extérieur (33, 33a, 33b),
- on introduit les moyens d'acquisition d'image (1) à l'intérieur de l'espace définit par le pneumatique (P),
- on active en rotation les moyens de centrage (2) de sorte que le pneumatique opère une rotation relative au tour de l'axe XX' par rapport aux moyens d'acquisition de l'image (1),
- on réalise l'image de la surface intérieure du pneumatique.

12. Méthode d'inspection selon la revendication 11 dans lequel l'image de la surface intérieure du pneumatique (P) est obtenue en faisant tourner le pneumatique de 360° par rapport aux moyens d'acquisition de l'image (1).

13. Méthode d'inspection selon la revendication 11 ou 12 dans lequel après avoir déployé les rouleaux de maintien intérieur (31, 32) et les rouleaux de relevage (41, 32, 43, 44) dans l'espace intérieur du pneumatique,
- on abaisse axialement les rouleaux de maintien intérieur (31, 32) par rapport aux rouleaux de relevage (41, 42, 43, 44),
- on relève partiellement le second bourrelet (B2) en relevant le plateau 5 et en mettant les rouleaux de relevage (41, 42, 43, 44) en contact avec la partie axialement interne du second bourrelet (B2) jusqu'à une hauteur donnée,
- on relève les rouleaux de maintien intérieur (31, 32) de manière à relever le reste de la circonférence dudit second bourrelet (B2).

14. Méthode d'inspection selon la revendication 13 dans laquelle :
- on réalise une première image de la première moitié de la partie intérieure du pneumatique comprise entre le second bourrelet (B2) et l'équateur (E), puis
- on retourne le pneumatique de manière à obtenir une deuxième image de l'autre moitié de la partie intérieure,
- on obtient l'image de la surface intérieure en juxtaposant la première et la seconde image.

## Patentansprüche

1. Vorrichtung zur Prüfung der zwischen einem ersten und einem zweiten Wulst (B1, B2) eines Luftreifens (P) befindlichen Innenfläche, die enthält:
- Einrichtungen (1) zur Erfassung des Bilds der Innenfläche des Luftreifens, die von Beleuchtungseinrichtungen und einer oder mehreren Kameras gebildet werden und in den Innenraum des Luftreifen eindringen und das Bild eines Winkelbereichs mit gegebenem Winkel (a)□ der Innenfläche des Luftreifens erzeugen können,
- Zentriereinrichtungen (2), die den ersten Wulst (B1) über die Gesamtheit seines Umfangs auf einer Bezugsplatte verriegeln und den Luftreifen bezüglich der Bilderfassungseinrichtungen in relative Drehung um seine Achse XX' versetzen können,
wobei die Vorrichtung ebenfalls Öffnungs- und Halteeinrichtungen des zweiten Wulsts (B2) enthält, die zwei Rollen für den inneren Halt (32, 32), die in Umfangsrichtung aneinandergrenzend angeordnet sind, mit im Wesentlichen radialer Achse, winkelmäßig um einen Winkel mindestens gleich dem Winkel des Winkelbereichs (a) beabstandet, die sich zwischen einer eingezogenen Stellung und einer ausgefahrenen Stellung verschieben, in der die Rollen für den inneren Halt mit der Innenseite des zweiten Wulsts (B2) in Kontakt kommen und eine Bewegung in axialer Richtung durchführen können, um den zweiten Wulst (B2) bezüglich der Äquatorlinie des Luftreifens zu entfernen und dann offenzuhalten, und mindestens eine Rolle für den äußeren Halt (33, 33a, 33b) mit im Wesentlichen radialer Achse aufweisen, die im Wesentlichen in der Mitte des von den zwei Rollen für den inneren Halt (31, 32) gebildeten Winkelsektors angeordnet sind und auf dem äußeren Teil des zweiten Wulsts (B2) in Auflage kommen können, wobei die Rollen für den inneren (31, 32) und äußeren Halt (33, 33a, 33b) um die Achse XX' der Erfassungseinrichtungen des Bilds (1) drehfest verbunden montiert sind.

2. Vorrichtung nach Anspruch 1, die zwei Rollen für den äußeren Halt (33, 33a, 33b) enthält, die winkelmäßig um einen Winkel mindestens gleich dem Winkel des Winkelbereichs (a) beabstandet sind.

3. Vorrichtung nach einem der Ansprüche 1 bis 2, wobei die Bilderfassungseinrichtungen (1) so positioniert sind, dass ein Bild eines Winkelabschnitts (a) des Inneren des Luftreifens zentriert auf die Mitte des von den Achsen der zwei Rollen für den inneren Halt (31, 32) gebildeten Winkelsektors erfasst wird.

4. Vorrichtung nach einem der Ansprüche 1 bis 3, wobei die Erfassungseinrichtungen des Bilds (1) und die Rollen für den inneren (31, 32) und äußeren Halt (33, 33a, 33b) um die Achse XX' drehfest sind, und wobei der Luftreifen (P) durch die Zentriereinrichtungen (2) um seine Achse XX' in Drehung versetzt wird.

5. Vorrichtung nach einem der Ansprüche 1 bis 4, die zusätzlich zum Paar von Rollen für den inneren Halt (31, 32) eine oder mehrere Heberollen (41, 42, 43, 44) mit einer im Wesentlichen radialen Achse enthält, die sich radial zwischen einer eingezogenen Stellung und einer ausgefahrenen Stellung verschieben, in der die Heberollen mit der axial inneren Seite des zweiten Wulsts (B2) in Kontakt kommen und eine Bewegung in axialer Richtung ausführen können, um den zweiten Wulst (B2) bezüglich der Äquatorlinie (E) des Luftreifens (P) anzuheben, wobei die Heberollen (41, 42, 43, 44) in Umfangsrichtung im komplementären Teil des von den Rollen für den inneren Halt (31, 32) eingenommenen Winkelraums angeordnet sind.

6. Vorrichtung nach einem der Ansprüche 1 bis 5, die Zapfen (51, 52, 53, 54) enthält, die axial außerhalb des zweiten Wulsts (B2) in gegebenem Abstand (d) zu den Heberollen (41, 42, 43, 44) angeordnet sind und eine axiale Bewegung ausführen können, um den zweiten Wulst (B2) in die geschlossene Stellung zurückzubringen.

7. Vorrichtung nach einem der Ansprüche 1 bis 6, wobei die Rollen für den inneren Halt (31, 32) und die Heberollen (41, 42, 43, 44) ein im Wesentlichen kegelstumpfförmiges radiales Profil haben.

8. Vorrichtung nach einem der Ansprüche 1 bis 7, wobei die Zentriereinrichtungen des Luftreifens (2) einen Zentrierring (20), der eine Bezugsplatte bildet und den ersten Wulst (B1) aufnehmen kann, und einziehbare Verriegelungshaken (21) des zweiten Wulsts auf dem Zentrierring enthalten, die in gleichmäßigen Abständen auf der Gesamtheit des Umfangs des Zentrierrings (20) angeordnet sind.

9. Vorrichtung nach Anspruch 8, wobei der Zentrierring (20) einen zentralen Durchgang aufweist, der den Zugang der Erfassungseinrichtungen des Bilds (1) ins Innere des Luftreifens (P) erlaubt.

10. Vorrichtung nach einem der Ansprüche 1 bis 9, wobei die Erfassungseinrichtungen des Bilds (1) eine Laserbeleuchtungseinrichtung, die es ermöglicht, eine radiale Linie zu beleuchten, und eine Kamera enthalten, die das von der Innenfläche des Luftreifens reflektierte Licht auffangen kann, und wobei die radiale Linie im Wesentlichen auf die Mitte des vom Paar von Rollen für den inneren Halt (31, 32) gebildeten Winkelsektors zentriert ist.

11. Prüfverfahren des inneren Teils eines Luftreifens, der einen ersten und einen zweiten Wulst (B1, B2) enthält, mit Hilfe einer Halte- und Prüfvorrichtung nach einem der Ansprüche 1 bis 8, das die Schritte enthält, während denen:
- der Luftreifen (P) auf der Vorrichtung angebracht wird,
- die Zentriereinrichtungen (2) aktiviert werden, um den ersten Wulst (B1) auf dem Zentrierring zu verriegeln,
- die Rollen für den inneren Halt (31, 32) und die Heberollen (41, 42, 43, 44) radial eingezogen werden,
- die Platte (5) in Richtung des Innenraums des Luftreifens abgesenkt wird,
- die Rollen für den inneren Halt (31, 32) und die Heberollen (41, 32, 43, 44) radial in den Innenraum des Luftreifens ausgefahren werden,
- der zweite Wulst (B2) axial angehoben wird, indem die Platte (5) angehoben wird,
- die Rolle(n) für den äußeren Halt (33, 33a, 33b) abgesenkt werden, um den zweiten Wulst (B2) fest in der angehobenen Stellung zwischen den zwei Rollen für den inneren Halt (31, 32) und der/den Rollen für den äußeren Halt (33, 33a, 33b) zu halten,
- die Bilderfassungseinrichtungen (1) ins Innere des vom Luftreifen (P) definierten Raums eingeführt werden,
- die Zentriereinrichtungen (2) in Drehung aktiviert werden, so dass der Luftreifen eine relative Drehung um die Achse XX' bezüglich der Erfassungseinrichtungen des Bilds (1) ausführt,
- das Bild der Innenfläche des Luftreifens erzeugt wird.

12. Prüfverfahren nach Anspruch 11, wobei das Bild der Innenfläche des Luftreifens (P) erhalten wird, indem der Luftreifen bezüglich der Erfassungseinrichtungen des Bilds (1) um 360° gedreht wird.

13. Prüfverfahren nach Anspruch 11 oder 12, wobei nach dem Ausfahren der Rollen für den inneren Halt (31, 32) und der Heberollen (41, 32, 43, 44) in den Innenraum des Luftreifens
- die Rollen für den inneren Halt (31, 32) bezüglich der Heberollen (41, 42, 43, 44) axial abgesenkt werden,
- der zweite Wulst (B2) teilweise angehoben wird, indem die Platte (5) angehoben wird und die Heberollen (41, 42, 43, 44) mit dem axial inneren Teil des zweiten Wulsts (B2) bis auf eine gegebene Höhe in Kontakt gebracht werden,
- die Rollen für den inneren Halt (31, 32) angehoben werden, um den Rest des Umfangs des zweiten Wulsts (B2) anzuheben.

14. Prüfverfahren nach Anspruch 13, wobei:
- ein erstes Bild der ersten Hälfte des inneren Teils des Luftreifens erzeugt wird, die zwischen dem zweiten Wulst (B2) und der Äquatorlinie (E) liegt, dann
- der Luftreifen umgedreht wird, um ein zweites Bild der anderen Hälfte des inneren Teils zu erhalten,
- das Bild der Innenfläche erhalten wird, indem das erste und das zweite Bild aneinandergelegt werden.

## Claims

1. Device for inspecting the internal surface located between a first and a second bead (B1, B2) of a tyre (P), comprising:
- means for acquiring the image of the internal surface (1) of the tyre, said means being formed by lighting means and one or more cameras and being able to pass into the space inside the tyre and to produce the image of an angular region of given angle (a)□ of the internal surface of the tyre,
- centring means (2) that are able to lock the first bead (B1) around its entire circumference on a reference plate, and are able to set the tyre into relative rotation about its axis XX' with respect to said image acquisition means,
**the** said device comprising means for opening and for holding the second bead (B2), said means comprising two internal holding rollers (31, 32) which are disposed circumferentially in a contiguous manner with respect to one another and have a generally radial axis, and at least one external holding roller (33, 33a, 33b) which has a generally radial axis, is disposed substantially in the middle of the angular sector formed by the two internal holding rollers (31, 32) and is able to come into abutment against the external part of said second bead (B2), the internal (31, 32) and external (33, 33a, 33b) holding rollers being mounted so as to rotate as one about the axis XX' of said image acquisition means (1).

2. Device according to Claim 1, comprising two external holding rollers (33, 33a, 33b) spaced apart angularly by an angle at least equal to the angle of the angular region (a).

3. Device according to one of Claims 1 to 2, in which the image acquisition means (1) are positioned so as to acquire an image of an angular portion (a) of the interior of the tyre centred on the middle of the angular sector formed by the axes of the two internal holding rollers (31, 32).

4. Device according to one of Claims 1 to 3, in which the image acquisition means (1) and the internal (31, 32) and external (33, 33a, 33b) holding rollers are unable to rotate about the axis XX', and in which the tyre (P) is rotated about its axis XX' by said centring means (2).

5. Device according to one of Claims 1 to 4, comprising, in addition to the pair of internal holding rollers (31, 32), one or more lifting rollers (41, 42, 43, 44) which have a generally radial axis and move radially between a retracted position and an extended position in which said lifting rollers are able to come into contact with the axially internal side of said second bead (B2) and to execute a movement in the axial direction so as to lift said second bead (B2) with respect to the equator (E) of the tyre (P), said lifting rollers (41, 42, 43, 44) being disposed circumferentially on the complementary part of the angular space occupied by the internal holding rollers (31, 32).

6. Device according to one of Claims 1 to 5, comprising lugs (51, 52, 53, 54) which are disposed axially on the exterior of the second bead (B2) at a given distance (d) from the lifting rollers (41, 42, 43, 44) and are able to carry out an axial movement so as to return the second bead (B2) to the closed position.

7. Device according to one of Claims 1 to 6, in which the internal holding rollers (31, 32) and the lifting rollers (41, 42, 43, 44) have an approximately frustoconical radial profile.

8. Device according to one of Claims 1 to 7, in which the tyre centring means (2) comprise a centring ring (20), which forms a reference plate and is able to receive the first bead (B1), and retractable hooks (21) for locking said second bead on said centring ring, said hooks being placed at regular intervals around the entire circumference of said centring ring (20).

9. Device according to Claim 8, in which the centring ring (20) has a central passage allowing the image acquisition means (1) to access the interior of the tyre (P).

10. Device according to one of Claims 1 to 9, in which the image acquisition means (1) comprise a laser lighting means for illuminating a radial line and a camera able to capture the light reflected by the internal surface of the tyre, and in which said radial line is centred approximately on the middle of the angular sector formed by the pair of internal holding rollers (31, 32).

11. Method for inspecting the internal part of a tyre comprising a first and a second bead (B1, B2) with the aid of a holding and inspecting device according to one of Claims 1 to 8, comprising the steps in which:
- the tyre (P) is fitted on the device,
- the centring means (2) are activated so as to lock the first bead (B1) on the centring ring,
- the internal holding rollers (31, 32) and the lifting rollers (41, 42, 43, 44) are retracted radially,
- the plate (5) is lowered in the direction of the space inside the tyre,
- the internal holding rollers (31, 32) and the lifting rollers (41, 32, 43, 44) are extended radially into the space inside the tyre,
- the second bead (B2) is lifted axially by lifting the plate (5),
- the external holding roller(s) (33, 33a, 33b) is/are lowered so as to hold the second bead (B2) securely in the lifted position between the two internal holding rollers (31, 32) and the external holding roller(s) (33, 33a, 33b),
- the image acquisition means (1) are introduced into the interior of the space defined by the tyre (P),
- the centring means (2) are caused to rotate such that the tyre executes a relative rotation about the axis XX' with respect to the image acquisition means (1),
- the image of the internal surface of the tyre is produced.

12. Inspection method according to Claim 11, in which the image of the internal surface of the tyre (P) is obtained by rotating the tyre through 360° with respect to the image acquisition means (1).

13. Inspection method according to Claim 11 or 12, in which, after the internal holding rollers (31, 32) and the lifting rollers (41, 32, 43, 44) have been extended into the space inside the tyre,
- the internal holding rollers (31, 32) are lowered axially with respect to the lifting rollers (41, 42, 43, 44),
- the second bead (B2) is partially lifted by lifting the plate (5) and bringing the lifting rollers (41, 42, 43, 44) into contact with the axially inner part of the second bead (B2) up to a given height,
- the internal holding rollers (31, 32) are lifted so as to lift the rest of the circumference of said second bead (B2).

14. Inspection method according to Claim 13, in which:
- a first image is produced of the first half of the internal part of the tyre between the second bead (B2) and the equator (E), and then
- the tyre is turned over so as to obtain a second image of the other half of the internal part,
- the image of the internal surface is obtained by placing the first and the second image alongside one another.
